# EUROPEAN PATENT APPLICATION

(11) **EP 0 875 700 A2**
(43) Date of publication of application: **04.11.1998**
(21) Application number: 98107611.0
(22) Date of filing: 27.04.1998
(51) Int. Cl.: F16J 15/32

(54) **Sensor seal unit for two elements in mutual rotation, especially for a rolling bearing**

(30) Priority: 29.04.1997 IT TO970371
(71) Applicant: SKF INDUSTRIE S.p.A., I-10123 Torino (IT)
(72) Inventor: Vignotto, Angelo, 10134 Torino (IT); Peretti, Pietro Antonio, 10060 Piscina, Torino (IT)
(74) Representative: Di Francesco, Gianni

(57) **Abstract**

The seal unit (1) for two rings (2,3) of a rolling bearing (4) includes a shield basically rigid (6) integral with the rotating ring (3) of the bearing (4) and provided with an annular wet-seal component (7) that works together with a seal surface (15) integral with the fixed ring (2) and a magnetic ring (30) that works together with an external detector measuring the relative rotation speed of the two rings (2, 3); the whole magnetic ring (30) is housed into an annular blind cavity (45) bounded radially by a cylindrical portion of the rigid shield (6) and, at the other side, by a support element, basically cylindrical (40) made of elastomeric material and basically coaxial to the cylindrical portion (8) and projecting axially from a radial flange (9) of the shield (6); the magnetic ring (30) is axially and angularly locked into the cavity (45) against a back wall defined by the radial flange (9) of the shield (6) by means of co-moulding on the same and on the shield of the elastomeric support element (40)

## Description

The present invention relates to a sensor seal unit for two mechanical elements coupled in mutual rotation, i.e. the two rings of a rolling bearing, including a signalling magnetic ring working together with an external detector measuring the rotation speed of one of the two elements in relationship to the other.

Seal units of the type above mentioned, that is of the type with the magnetic ring and the detector integral with the rotating ring and the stationary ring of a rolling bearing respectively, are already known.

It is a general practise, to house the magnetic ring into an annular cavity made in a rigid shield set in axial rabbet against the stop surface of the shield itself. It is clear that in this way the magnetic ring is not steadily anchored to the shield nor is it protected enough from possible impacts. According to an already known solution (described in the Italian patent application n.TO94A000352), the magnetic ring is instead keyed on a specially shaped portion of the seal element of the unit, in particular partially inserted into an annular blind cavity defined by said element.

Nevertheless, the units of this type also present a few inconveniences: in the first place, it may be difficult to assemble both the magnetic ring in its seat and the whole unit on the bearing. In the second place, when the magnetic is being used, it may move from its seat thus compromising the functionality of the speed detector.

Besides, since the magnetic ring is made of a relatively fragile material and is inserted into a seat made of elastomeric material, it is possible for it to be broken during assembly and displacement. On the other hand, it is exactly because of its fragility that the magnetic ring cannot be directly forced on a metal element.

For the same reason it is quite easy for the magnetic ring to be damaged even while it is being used, i.e. because of anomalous impacts. Finally, in case it is broken the magnetic ring may become disengaged from the seal unit so that the speed detector turns totally inefficient: besides, the possibility exists that a few fragments come off the ring and being not kept inside the seat move to and damage the rotating parts of the bearing.

It is an object of the present invention to overcome the aforementioned problems which the known type of seal unit present and, especially, to provide a seal unit including a signalling magnetic ring that is simply made, practical to be used and easy to be assembled and yet can keep the detector element fully efficient under any working conditions and even in the case it is accidentally broken.

Said object is accomplished by the present invention since it relates to a seal unit for two elements coupled in mutual rotation, especially the two rings of a rolling bearing, including a shield basically rigid integral with the first of said coupled elements and provided of an annular wet-seal element made of elastomeric material working together with a seal surface integral with the second of said coupled elements, and a magnetic signalling ring intended to work together with a detector integrally connectable with said second element, said shield being provided with an annular cavity to house said magnetic ring; characterised in that said cavity is an annular blind cavity, said magnetic ring being entirely housed in said annular blind cavity and being axially and angularly locked inside it.

Said annular blind cavity is radially bounded, on opposite sides, by a cylindrical portion of said shield and by a support element made of elastomeric material, said support element being basically coaxial to said cylindrical portion of the shield; said annular blind cavity being closed at the back by a radial flange of said shield.

The locking of the magnetic ring in its seat is achieved by means of co-moulding, on both the magnetic ring and the shield, said elastomeric support element which can also be extended to close a front annular opening of the seat.

Therefore, the seal unit according to the present invention is easy to be assembled as well as simple and economical to be realised. Besides, the magnetic ring is steadily anchored to the metal shield and is well protected from possible impacts, being thus reduced the risk that the magnetic ring itself is damaged; anyway, even in the case the magnetic ring is broken, the speed detector remains efficient because the magnetic ring is kept into its working position by the elastomeric material of the support element.

The present invention is now described more in detail, as non-restrictive embodiment, through the following embodiments relating to the figures in the appended drawing, in which:
- figure 1 is a radial sectional view of a seal unit according to the invention;
- figure 2 is a radial sectional view of a possible variation of the unit in figure 1.

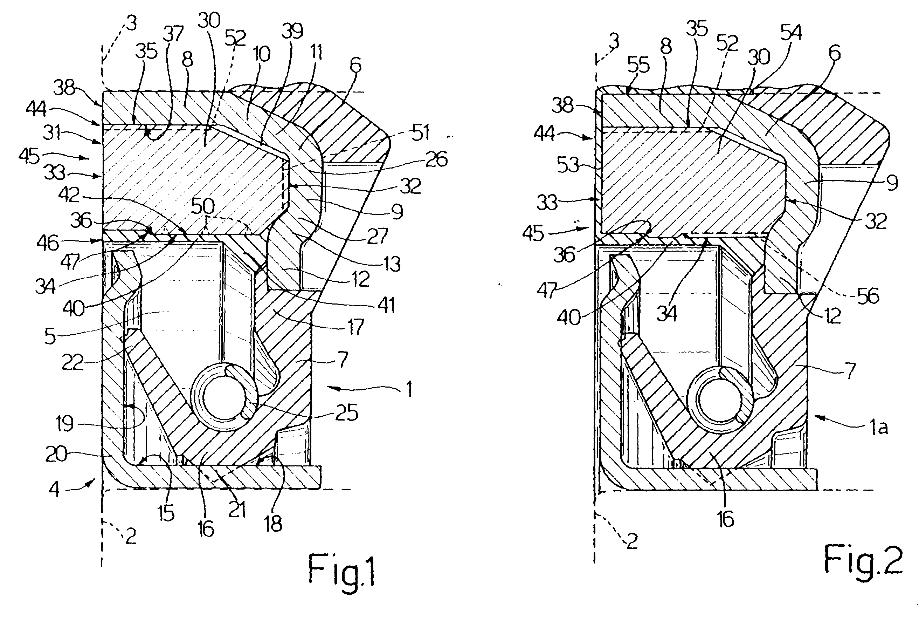

With reference to figure 1, number 1 indicates a seal unit for two elements coupled in mutual rotation: more precisely, the seal unit 1 is wet-seal interposed between the two rings 2, 3 of a rolling bearing 4, already known and schematically represented in the figure. The seal unit according to the present invention could be applied to a configuration of rotating elements different from the one that is here illustrated as embodiment only. In the present description, without reducing the limits of the invention, the inner ring 2 is considered as stationary while the outer ring 3 is a revolving one; a hollow 5 defined between the rings 2, 3 houses the rolling bodies of the bearing 4, already known and not represented in the figure for simplicity's sake.

The seal unit 1 includes a shield 6, basically rigid, i.e. consisting of a metal framework, integral with the outer ring 3 of the bearing 4 and provided with an annular seal element 7 made of elastomeric material, wet-seal sliding on a surface integral with the ring 2.

The shield 6 is cup-shaped so that it can include a cylindrical portion 8 and a radial flange 9 projecting from an extremity 10 of the cylindrical portion 8; the flange 9 is preferably jointed to the extremity 10 of the cylindrical portion 8 by means of a first annular connection portion 11 presenting a predetermined inclination in relationship to the cylindrical portion 8. Besides, the flange 9 is provided, at one free end 27 opposite to one end 26 engaging the connection portion 11, with an radially internal annular appendix 12, axially displaced in relationship to the flange 9 towards the cylindrical portion 8 and jointed to the flange 9 by means of a second annular connection portion 13.

The annular appendix 12 supports the annular seal element 7 made of elastomeric material, co-moulded with the shield 6 being also glued to it during the vulcanisation; the seal element 7, while in use, is wet-seal working together with a seal surface 15 integral with the internal ring 2; in the non-restrictive embodiment shown, the seal element 7 is provided with an annular "V"-shaped seal lip 16 axially projecting from an engagement part 17 of the seal element 7 to the appendix 12 and slide-working together with two orthogonal contiguous surfaces 18, 19, of a second rigid shield 20 integral with the inner ring 2, respectively with an annular edge 21 coincident with the vertex of the "V"-shaped lip 16 and with a free end 22 of said lip. The sliding contact between the seal lip 16 and the sliding surfaces 18, 19 is guaranteed because of a predetermined assembly interference and of the action of a spring 25, of the known type, housed into an annular seat obtained in a radially external surface of the same seal lip 16.

The seal unit 1 includes a magnetic signalling ring 30, of a basically known type, i.e. made of plastoferrite, and adapted to work together with an external detector integral with the stationary ring 2 of the bearing 4, already known and not shown in figure 1, in order to measure the speed of the mutual rotation of the rings 2, 3 of the bearing 4.

The magnetic ring 30 is housed into an annular seat 31 defined by the peculiar configuration of the shield 20: thus the magnetic ring 30 is placed radially internal in relationship to the shield 6 that defines the annular seat 31.

According to a preferred embodiment, the shape of the magnetic ring 30 is such that it reproduces the contour of the shield 6 so that is perfectly adapted to the configuration of the annular seat 31. The magnetic ring 30 is than bounded axially by two annular and parallel sides 32, 33 and radially by two lateral surfaces 34, 35, internal and external respectively: the side 32, intended to rabbet against the flange 9 of the shield 6, is bevelled in coincidence with both surfaces 34, 35. Besides, the internal lateral surface 34 presents a radial step 36 located at a predetermined distance from the side 33, so that in coincidence with said step there is a reduction of the radial section of the magnetic ring 30 in the portion towards side 33.

Thanks to its configuration, the magnetic ring 30 can be inserted into the seat 31: more precisely, the lateral surface 35 of the magnetic ring 30 is coupled, through a small radial interference, with a lateral surface radially internal 37 to the cylindrical portion 8 of the shield 6, while the annular side 32 of the ring 30 is resting axially against the flange 9 of the shield 6. The thickness of the magnetic ring 30, defined as the axial distance between its parallel sides 32, 33, is shorter than, or basically equivalent to, the axial extension of the shield 6 that is the axial distance between the flange 9 and one annular edge of end 38 of the cylindrical portion 8: preferably, the thickness of the magnetic ring 30 is such that, when the magnetic ring 30 is inserted into the seat 31, its side 32 is flush with the annular edge of end 38.

Besides, according to a preferred embodiment, a small annular port 39, in correspondence with the first connection portion 11, exists between the magnetic ring 30 and the shield 6.

In order to steadily lock the magnetic ring 30 into the respective seat 31, the seal unit 1 includes and additional annular support element 40 made of elastomeric material that, as well as the seal element 7, is co-moulded with the shield 6 and also glued to it during the vulcanisation being thus integral to the same shield 6. The support element 40 is basically cylindrical and is axially projecting from the flange 9 of the shield 6, more precisely from its appendix 12 to which it is connected through a portion of root 41. One radially external lateral surface 42 of the support element 40 faces the internal lateral surface 37 of the cylindrical portion 8 of the shield 6 so that it radially bounds the seat 31 thus defining, together with the shield 6, an annular blind cavity 45 into which the magnetic ring 30 is inserted. The annular blind cavity 45 is closed at the back by the radial flange 9 of the shield 6 and presents a front annular opening 44.

The axial extension of the support element 40 is such that the annular edge of its end 46, opposite to the root portion 41, is flush with the side 33 of the magnetic ring 30 which is then completely inserted, that is in its whole axial thickness, inserted into the seat 31, more precisely into the annular cavity 45.

The external lateral surface 42 of the support element 40 presents a contour conjugate with the internal lateral surface 34 of the magnetic ring 30 and it also presents a radial step 47 that rabbets and work together with the respective step 36 of the magnetic ring 30, so that the same ring is locked axially.

The support element 40 can be made either as a part separate from the seal element 7 (a different elastomeric material can be used), or as a whole with said element.

According to the present invention, the magnetic ring 30 can be assembled on the rigid shield 6 by means of direct co-moulding inside the cavity 45. To sum up, the magnetic ring 30 is placed into the seat 31 defined by the shield 6: the peculiar configuration of the magnetic ring 30 and, in particular, its bevelled side 32, make it easy to insert and centre correctly the same ring 30 into the seat 31. After that, the seal elements 7 and the support elements 40 made of elastomeric material are injection-moulded or compression-moulded on the shield 6 or on the magnetic ring 30 so that the ring 30 inside the seat 31 is let into the elastomeric material of which said elements are made and the annular blind cavity 45 is formed with the magnetic ring 30 already inserted and locked in it. Then, the elastomeric material of the support element 40 vulcanises on the rigid shield 6 treated, if necessary, with special adhesion primers, and on the ring 30 so that, thanks to the step 47, said ring is axially locked inside the annular cavity 45.

Further guarantee of axial stability of the magnetic ring 30 is achieved by providing the internal lateral surface 34 of said ring with a multiplicity of circumferential grooves 50, indicated by broken lines in figure 1, which the elastomeric material of the support element 40 fills during the moulding phase.

An additional multiplicity of radial grooves 51, also indicated by broken lines in figure 1, can be made on the side 32 of the magnetic ring 30 so that during the moulding phase the elastomeric material of the support element 40 can flow and fill the port 39 between the same magnetic ring 30 and the shield 6. Similarly, the external lateral surface 35 of the magnetic ring 30 can also be provided with axial grooves 52 which after being filled with elastomeric material not only prevent the rotation of the magnetic ring 30 inside the annular cavity 45, but also make it easier to adapt the magnetic ring 30 to the annular cavity 45, thus compensating any radial clearance, and eventually help protecting the magnetic ring 30 from impacts that can be transmitted through the rigid shield 6.

Figure 2, in which details similar or identical to those already described are indicated by the same numbers, illustrates a possible variation of the seal unit according to the present invention.

The seal unit is basically similar to the seal unit 1 described before, but the support element 40 is extended to form a coating layer 53 that, by closing the front opening 44 of the annular cavity 45, covers the side 33 of the magnetic ring 30 and the annular edge of end 38 of the cylindrical portion 8 of the shield 6. It is clear that the coating layer 53 could be made not as a whole with the support element 40 but as a separate element. In any case, the simultaneous moulding of the elastomeric material of the coating layer 53 during the phase of vulcanisation allows to achieve a steady anchorage of said coating layer to the rigid shield 6: the magnetic ring 30 thus remains entirely inserted into the annular cavity 45 closed by the coating layer 53; in this way, not only the magnetic ring 30 is steadily fastened to its seat but it is additionally and efficiently protected from accidental impacts.

The presence of the coating layer 53 does not reduce the functionality of the speed detector facing the magnetic ring 30: on the contrary, said layer 53 could fill completely the annular space between the magnetic ring 30 and the sensor of said detector so that the detector is slide-rabbeting against it.

Besides, in the embodiment shown in figure 2 the coating layer 53 is partially extended, by means of a portion 54, to a radially external lateral surface 55 of the cylindrical portion 8 of the shield 6, i.e. in order to facilitate the coupling of the shield 6 with the outer ring 3 of the bearing 4, according to a solution already known and not shown in detail.

In the case of variation 1a, the magnetic ring 30 is provided, as an alternative to the grooves 52 or as an addition to them, with a multiplicity of axial grooves 53 made on a portion of the internal lateral surface 34 included between the step 36 and the side 32; during the moulding phase of the seal element 7 and of the support element 40 the axial grooves 56 are filled with the elastomeric material in order to prevent the rotation of the magnetic ring 30 inside the annular cavity 45.

The previous description makes evident the advantages of a seal unit according to the present invention.

First of all, the seal unit according to the present invention is simple to be assembled: the magnetic ring 30 is in fact easily inserted into the seat 31 on the shield 6, basically with no risk of breakage, thanks also to the peculiar configuration of the ring and especially to the presence of the bevelled side; after that it is possible to mould the support element 40 that locks the magnetic ring 30 into its correct working position. In short, according to the present invention the magnetic ring 30 is at least partially incorporated into an elastomeric material (the support element 40) integral with the shield 6.

The configuration of the shield 6 provides to the magnetic ring 30 efficient axial protection against impacts thus reducing the risk of damages to the ring; besides, the presence of the support element 40 made of elastomeric material, in which the magnetic ring 30 is incorporated so that the interposition of elastomeric material between the ring and the rigid shield 6 is guaranteed, allows the unit to compensate the different thermal expansion of the materials of which the different components are made.

Eventually, the speed detector coupled with the unit according to the invention is kept fully operative also in the case that the magnetic ring 30 is damaged or broken, since the ring 30 or its fragments are kept together by the support element 40, especially in the case of the solution including the annular blind cavity 45 closed by the coating layer 53.

It is then clear that modifications or variations that do not go beyond the limits of the claims, can be added to the seal unit described above.

For instance, the magnetic ring 30 can be made of magnetic rubber instead of plastoferrite: in this case it is possible to realise a two-phase moulding: the procedure could consist of a first injection of magnetic rubber, which solidifies on the rigid shield 6 to form the signalling ring 30, followed by a second injection of the materials for the seal element 7 and the support element 40 and then both compounds would be vulcanised simultaneously. The same principle can be followed also in the case of compression moulding, first by inserting into the open mould, successively, the annular semimanufactured products in green compound that are destined to form the magnetic ring (30) and the support element (40) and then performing the compression of the same as well as the vulcanisation of the compounds, with the mould closed.

In this way, it is possible to guarantee better adhesion of the magnetic ring 30 to the shield 6 since the magnetic rubber vulcanises directly on the metal of the shield 6 and on the support element 40.

## Claims

1. Seal unit (1) for two elements (2, 3) coupled in mutual rotation, especially the two rings of a rolling bearing, including a shield (6) basically rigid integral with the first (3) of said coupled elements and provided of an annular wet-seal element (7) made of elastomeric material working together with a seal surface (15) integral with the second (2) of said coupled elements, and a magnetic signalling ring (30) intended to work together with a detector integrally connectable with said second element (2), said shield (6) being provided with an annular seat (31) to house said magnetic ring (30); characterised in that said seat (31) is an annular blind cavity (45), said magnetic ring being entirely housed in said annular blind cavity (45) and being axially and angularly locked inside it.

2. Seal unit as claimed in claim 1, characterised in that said annular blind cavity (45) is radially bounded, on opposite sides, by a cylindrical portion (8) of said shield (6) and by a support element (40) made of elastomeric material, said support element (40) being basically coaxial to said cylindrical portion (8) of the shield (6); said annular blind cavity (45) being closed at the back by a radial flange (9) of said shield (6).

3. Seal unit as claimed in claim 2, characterised in that said annular support element (40) made of elastomeric material is co-moulded and glued during the vulcanisation phase to said shield (6), after said magnetic ring (40) had been inserted inside said cylindrical portion (8) of the shield (6), in order to incorporate, at least partially, said magnetic ring (30).

4. Seal unit as claimed in claim 2 or 3, characterised in that said annular blind cavity (45) presents a front annular opening (44), said annular opening (44) being closed by a coating layer (53) made of elastomeric material, realised as a whole together with said annular support element (40).

5. Seal unit as claimed in any of the claims from 2 to 4, characterised in that one first end (27) of said radial flange (9) of the shield (6) is jointed to said cylindrical portion (8) by means of a first annular connection portion (11) presenting a predetermined inclination in relationship to the cylindrical portion (8), being said flange (9) provided, at one free end (27) with an annular appendix radially internal (12) , axially displaced in relationship to the flange (9) towards said cylindrical portion (8) and jointed to said flange (9) by means of a second annular connection portion (13).

6. Seal unit as claimed in any of claims from 2 to 5, characterised in that said annular support element (40) is basically cylindrical and is axially projecting from said flange (9) of the shield (6) through a portion of root 41.

7. Seal unit as claimed in any of the claims from 2 to 6, characterised in that said magnetic ring (30) is bounded axially by two annular and parallel plane sides (32, 33) and radially by one radially internal lateral surface (34), and one radially external lateral surface (35): the first of said sides (32), axially rabbeting against the flange (9) of the shield (6) being bevelled in coincidence with both lateral surfaces (34, 35).

8. Seal unit as claimed in claim 7, characterised in that said support element (40) presents an axial extension such that its end annular edge (46), opposite to said root portion (41), is basically coincident with the second (33) of said sides (32, 33) of the magnetic ring (30), opposite to said first side (32).

9. Seal unit as claimed in claim 7 or 8, characterised in that said coating layer (53) covers said second side (33) of the magnetic ring (30) as well as an annular edge of end (38) of said cylindrical portion (8) of the shield (6).

10. Seal unit as claimed in any of the claims from 7 to 9, characterised in that said internal lateral surface (34) of the magnetic ring (30) presents a radial step (36) located at a predetermined distance from said second side (33), said magnetic ring (30) presenting a reduction of the radial section in coincidence with said step (36) and in the portion towards said second side (33).

11. Seal unit as claimed in claim 10, characterised in that said external lateral surface (42) of the support element (40) presents a radial step (47) that rabbets and works together with said step (36) of the magnetic ring (30), so that the ring is locked axially.

12. Seal unit as claimed in any of the claims from 7 to 11, characterised in that said internal lateral surface (34) of said magnetic ring (30) is provided with a multiplicity of circumferential grooves (50) so that the elastomeric material of the support element (40) can flow inside said grooves (50) during the moulding phase.

13. Seal unit as claimed in any of the claims from 7 to 12, characterised in that between said magnetic ring (30) and said shield (6) there is an annular port (39) in correspondence with said shield (6).

14. Seal unit as claimed in claim 13, characterised in that said first side (32) of the magnetic ring (30) is provided with a multiplicity of radial grooves (51) which allow the fluid dynamic flow of the elastomeric material of said support element (40) during the phase of its moulding, so that said elastomeric material fills said annular port (39).

15. Seal unit as claimed in any of the claims from 7 to 14, characterised in that said external lateral surface (35) of the magnetic ring (30) is provided with a first set of axial grooves (52) which are filled by the elastomeric material during the moulding phase of said support element (40).

16. Seal unit as claimed in any of the claims from 7 to 15, characterised in that said internal lateral surface (34) of the magnetic ring (30) is provided with a second set of axial grooves (56) which are filled by the elastomeric material during the moulding phase of said support element (40).

17. Seal unit as claimed in any of the claims from 2 to 16, characterised in that said support element (40) is made as a part separate from said seal element (7).

18. Seal unit for two elements coupled in mutual rotation, especially the two rings of a rolling bearing, basically as described and illustrated with reference to the appended drawing.
